# EUROPEAN PATENT SPECIFICATION

(11) **EP 3 922 485 B1**
(45) Date of publication and mention of the grant of the patent: **05.06.2024**
(21) Application number: 21178400.4
(22) Date of filing: 09.06.2021
(51) Int. Cl.: B60C 9/06, B60C 9/18, B60C 9/14, B60C 9/20

(54) **TIRE FOR KART**
REIFEN FÜR GOKART
PNEU POUR KART

(30) Priority: 12.06.2020 JP 2020102209
(43) Date of publication of application: 15.12.2021
(73) Proprietor: Sumitomo Rubber Industries, Ltd., Kobe-shi, Hyogo-ken 651-0072 (JP)
(72) Inventor: KANNO, Nobuhiro, Kobe-shi, 651-0072 (JP)
(74) Representative: Manitz Finsterwald Patent- und Rechtsanwaltspartnerschaft mbB

(56) References cited:
- JP-A- H02 185 803
- JP-A- 2000 043 505
- JP-A- 2005 206 023
- JP-A- 2005 297 871
- JP-A- 2011 136 654
- JP-A- 2017 119 455
- US-A- 3 598 165

## Description

### BACKGROUND OF THE INVENTION

### Field of the Invention

The present invention relates to a tire for a kart.

### Description of the Background Art

In recent years, the performance of racing karts has improved significantly. Along with this, further performance improvement is required for tires for a kart that are mounted to racing karts. Various studies have been conducted to meet this demand (for example, Japanese Laid-Open Patent Publication No. 2001-47810). Prior art tires for a racing kart are disclosed in JP 2017 119 455 A and JP 2011 136 654 A. Further prior art pneumatic tires are disclosed in the following documents JP 2000 043 505 A, JP 2005 297 871 A, JP H02 185 803 A, US 3 598 165 A and JP 2005 206 023 A.

The tread of a tire is worn due to use. If a thick tread is adopted, the service life of the tire can be extended. However, the tire having the thick tread is heavy and affects the motion performance of a vehicle.

If the thickness of the tread can be reduced, the weight of the tire can be reduced. The light tire contributes to improvement of the motion performance of the vehicle. Therefore, tires for a kart are required to improve wear resistance and reduce the thickness of a tread.

Adopting a crosslinked rubber having a high modulus for a tread is considered in order to improve wear resistance. The crosslinked rubber having a high modulus has a low elongation at break. Thus, when the crosslinked rubber having a high modulus is adopted for a tread, there is a concern that damage such as cracks and tears may occur in the tread of a shoulder portion, which is stretched in the axial direction during cornering, resulting in reduction of durability.

The present invention has been made in view of the above circumstances, and an object of the present invention is to provide a tire for a kart that can improve wear resistance while suppressing influence on durability.

### SUMMARY OF THE INVENTION

A tire for a kart according to an aspect of the present invention includes: a tread having a tread surface that comes into contact with a road surface; a pair of sidewalls connected to ends of the tread and located radially inward of the tread; a pair of beads located radially inward of the sidewalls; a carcass extending on and between one bead and the other bead; and a pair of reinforcing layers disposed with an equator plane therebetween in an axial direction, wherein, in a radial direction, the reinforcing layers are located inward of the tread and stacked outward of the carcass, wherein the carcass (10) has a bias structure, in the axial direction, an inner end of each reinforcing layer is located inward of an end of the tread surface, in the axial direction, a position of an outer end of each reinforcing layer coincides with a position of the end of the tread surface, or the outer end of each reinforcing layer is located outward of the end of the tread surface, and each reinforcing layer is a rubber reinforcing layer harder than a rubber of the tread, or a cord reinforcing layer including a plurality of reinforcing cords aligned in a circumferential direction.

Preferably, in the tire for a kart, a ratio of a distance in the axial direction from the equator plane to the inner end of the reinforcing layer, to a distance in the axial direction from the equator plane to the end of the tread surface, is not less than 0.60 and not greater than 0.80.

Preferably, in the tire for a kart, a ratio of a distance in the axial direction from the end of the tread surface to the outer end of the reinforcing layer, to the distance in the axial direction from the equator plane to the end of the tread surface, is not greater than 0.15.

Preferably, in the tire for a kart, the tread has a stress at 200% elongation at 100°C of not less than 6.5 MPa.

Preferably, in the tire for a kart, the reinforcing layer is the cord reinforcing layer including the plurality of reinforcing cords aligned in the circumferential direction. An angle of the reinforcing cords relative to the equator plane is not less than 70° and not greater than 90°.

Preferably, in the tire for a kart, the carcass includes at least two carcass plies. Each of the two carcass plies includes a plurality of aligned carcass cords. An angle formed between the reinforcing cords and the carcass cords included in the carcass ply on which the cord reinforcing layer is stacked is not less than 50° and not greater than 70°.

Preferably, in the tire for a kart, the reinforcing layer is the rubber reinforcing layer harder than the rubber of the tread. The rubber reinforcing layer has a hardness at 23°C of not less than 80 and not greater than 95.

Preferably, in the tire for a kart, a difference between the hardness of the reinforcing layer and a hardness of the rubber of the tread at 23°C is not less than 10 and not greater than 30.

According to the present invention, a tire for a kart that can improve wear resistance while suppressing influence on durability is obtained.

### BRIEF DESCRIPTION OF THE DRAWINGS

FIG. 1 is a cross-sectional view showing a part of a tire for a kart according to an embodiment of the present invention;
FIG. 2 is a schematic diagram illustrating the configuration of a carcass and reinforcing layers; and
FIG. 3 is a schematic diagram illustrating the configuration of reinforcing layers of a tire for a kart according to another embodiment of the present invention.

### DESCRIPTION OF THE PREFERRED EMBODIMENTS

Hereinafter, the present invention will be described in detail based on preferred embodiments with appropriate reference to the drawings.

In the present invention, a state where a tire is fitted on a normal rim, the internal pressure of the tire is adjusted to a normal internal pressure, and no load is applied to the tire is referred to as a normal state. In the present invention, unless otherwise specified, the dimensions and angles of each component of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the case of a tire for a passenger car, unless otherwise specified, the normal internal pressure is 180 kPa.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads. In the case of a tire for a passenger car, unless otherwise specified, the normal load is a load corresponding to 88% of the above load.

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present invention, of the elements forming the tire, the hardness of each element formed from a crosslinked rubber is measured according to the standards of JIS K6253 under a temperature condition of 23°C using a type A durometer.

In the present invention, of the elements forming the tire, the elongation at break and the stress at 200% elongation of each element formed from a crosslinked rubber are measured under a temperature condition of 100°C according to the standards of JIS K6251.

In the present invention, a crosslinked rubber is a formed product obtained by crosslinking a rubber composition. The crosslinked rubber is obtained, for example, by pressurizing and heating the rubber composition. The rubber composition is an uncrosslinked rubber obtained by mixing a base rubber and chemicals in a kneader such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Although not described in detail, selection of a base rubber and chemicals, the amounts of the selected chemicals, etc., are determined as appropriate according to the specifications of elements for which the rubber composition is used.

In the present invention, the number of cords included per 5 cm of a tire element, including aligned cords, is represented as the density of cords included in this element (unit: ends/5 cm).

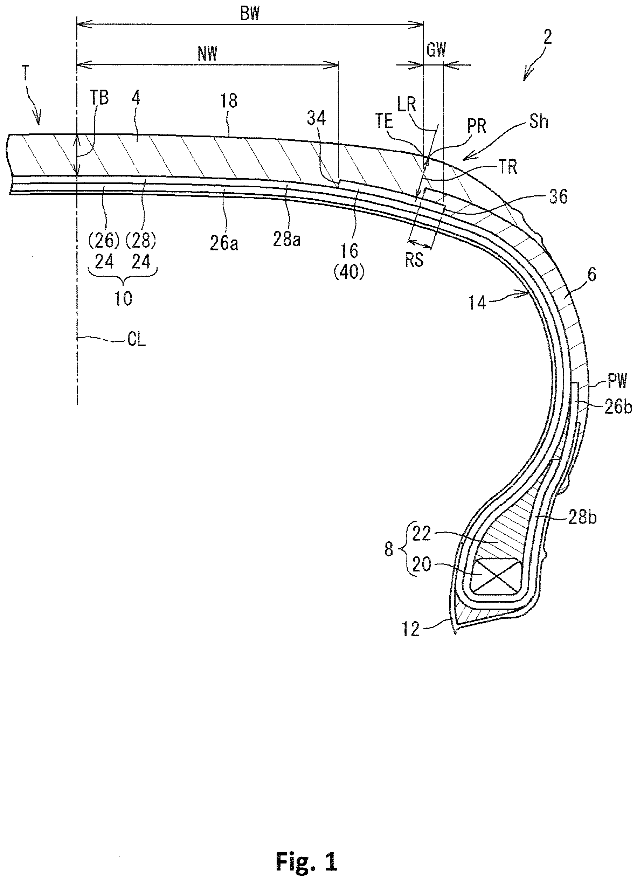

FIG. 1 shows an example of a tire 2 for a kart (hereinafter, sometimes referred to simply as "tire 2") according to an embodiment of the present disclosure. FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, the position represented by reference character PW is an axially outer end of the tire 2. The outer end PW is specified on the basis of the contour of the outer surface of the tire 2. In the case where decorations such as patterns and letters are present on the outer surface, the outer end PW is specified on the basis of the contour of a virtual outer surface obtained on the assumption that the decorations are not present.

The distance in the axial direction from one outer end PW to the other outer end PW is the maximum width of the tire 2, that is, a cross-section width (see JATMA or the like). Each outer end PW is a position (hereinafter, maximum width position) at which the tire 2 has the maximum width.

The tire 2 includes a tread 4, a pair of sidewalls 6, a pair of beads 8, a carcass 10, a pair of chafers 12, an inner liner 14, and a pair of reinforcing layers 16 as elements thereof.

The tread 4 comes into contact with a road surface at a tread surface 18 thereof. The tread 4 has the tread surface 18 that comes into contact with a road surface. The tread surface 18 has a shape that is convex outward in the radial direction. The tread 4 is formed from a crosslinked rubber.

In FIG. 1, the position represented by reference character TE is an end of the tread surface 18. The end TE of the tread surface 18 is a position, on the outer surface of the tread 4, corresponding to an axially outer end of a ground-contact surface (hereinafter, also referred to as an end of the ground-contact surface). The end of the ground-contact surface is specified on the basis of a ground-contact surface obtained when the normal load is applied to the tire 2 in the normal state and the tread 4 is brought into contact with a flat surface at a camber angle of 0°. The tread surface 18 is a part of the outer surface of the tread 4.

In FIG. 1, the length represented by a double-headed arrow BW is the distance in the axial direction from the equator plane CL to the end TE of the tread surface 18. In the present disclosure, the distance BW in the axial direction is also referred to as a reference width of the tread surface 18.

Each sidewall 6 is connected to an end of the tread 4 and located radially inward of the tread 4. The sidewall 6 is located outward of the carcass 10 in the axial direction. The sidewall 6 extends radially inward from the end of the tread 4 along the carcass 10.

The sidewall 6 is formed from a crosslinked rubber. In the tire 2, the hardness of the sidewall 6 at 23°C is not less than 40 and not greater than 95. In the tire 2, in the case where importance is placed on ride comfort, the hardness of the sidewall 6 at 23°C is preferably not less than 40 and preferably not greater than 55. On the other hand, in the case where importance is placed on motion performance, the hardness of the sidewall 6 is preferably not less than 80 and preferably not greater than 95. In this case, the sidewall 6 is harder than the rubber of the tread 4, and the difference between the hardness of the sidewall 6 and the hardness of the rubber of the tread 4 at 23°C is preferably not less than 10 and preferably not greater than 30.

Each bead 8 is located radially inward of the sidewall 6. The bead 8 includes a core 20 and an apex 22. The core 20 includes a steel wire which is not shown. The apex 22 is located radially outward of the core 20. The apex 22 is formed from a crosslinked rubber.

The carcass 10 is located inward of the tread 4 and the pair of sidewalls 6. The carcass 10 extends on and between one bead 8 and the other bead 8. The carcass 10 has a bias structure. The carcass 10 includes at least two carcass plies 24.

The carcass 10 of the tire 2 is composed of two carcass plies 24. Of the two carcass plies 24, the carcass ply 24 located on the inner side is referred to as a first ply 26, and the carcass ply 24 located on the outer side is referred to as a second ply 28.

The first ply 26 includes a first ply main body 26a that extends on and between one core 20 and the other core 20, and a pair of first turned-up portions 26b that are connected to the first ply main body 26a and turned up around the respective cores 20 from the inner side toward the outer side in the axial direction. In the tire 2, an end of each first turned-up portion 26b is located outward of the maximum width position PW in the radial direction.

The second ply 28 includes a second ply main body 28a that extends on and between one core 20 and the other core 20, and a pair of second turned-up portions 28b that are connected to the second ply main body 28a and turned up around the respective cores 20 from the inner side toward the outer side in the axial direction. In the tire 2, an end of each second turned-up portion 28b is located inward of the maximum width position PW in the radial direction. The end of each second turned-up portion 28b is covered with the first turned-up portion 26b from the axially outer side.

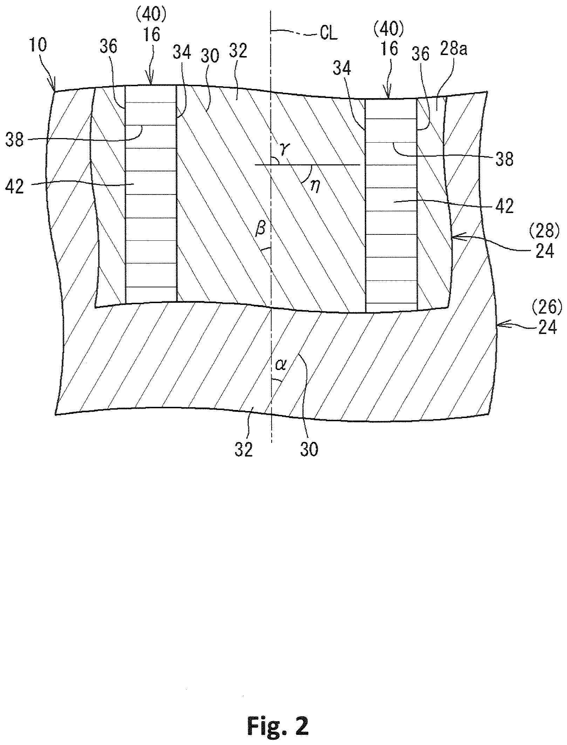

FIG. 2 shows the configuration of the carcass 10 in the tire 2 together with the configuration of the reinforcing layers 16 described later. In FIG. 2, the right-left direction is the axial direction of the tire 2, and the up-down direction is the circumferential direction of the tire 2.

In the tire 2, each of the first ply 26 and the second ply 28 includes a plurality of aligned carcass cords 30. In FIG. 2, for convenience of description, the carcass cords 30 are represented by solid lines, but the carcass cords 30 are covered with a topping rubber 32. Each of the first ply 26 and the second ply 28 includes the plurality of carcass cords 30 and the topping rubber 32 covering the carcass cords 30. In each of the first ply 26 and the second ply 28, the density of the carcass cords 30 is set within a range of not less than 20 ends/5 cm and not greater than 60 ends/5 cm.

In the tire 2, the carcass cords 30 are tilted relative to the equator plane CL. As shown in FIG. 2, the direction in which the carcass cords 30 included in the first ply 26 are tilted is opposite to the direction in which the carcass cords 30 included in the second ply 28 are tilted.

In FIG. 2, the angle indicated by reference character α is an angle (hereinafter, tilt angle) of the carcass cords 30 included in the first ply 26 relative to the equator plane CL. The tilt angle α of the carcass cords 30 is not less than 15° and not greater than 45°. The angle indicated by reference character β is a tilt angle of the carcass cords 30 included in the second ply 28. The tilt angle β of the carcass cords 30 is not less than 15° and not greater than 45°. In the tire 2, the tilt angle α of the carcass cords 30 included in the first ply 26 and the tilt angle β of the carcass cords 30 included in the second ply 28 are set to the same angle.

In the tire 2, cords formed from an organic fiber that is generally used in the tire field are used as the carcass cords 30. Examples of the organic fiber include nylon fibers, rayon fibers, polyester fibers, and aramid fibers.

Each chafer 12 is located radially inward of the bead 8. The chafer 12 comes into contact with a rim (not shown). The chafer 12 of the tire 2 includes a fabric and a rubber with which the fabric is impregnated.

The inner liner 14 is located inward of the carcass 10. The inner liner 14 forms an inner surface of the tire 2. The inner liner 14 maintains the internal pressure of the tire 2. The inner liner 14 is formed from a crosslinked rubber.

Each reinforcing layer 16 is included in an axially outer portion (hereinafter, also referred to as a shoulder portion Sh) of a tread portion T. The reinforcing layer 16 is located inward of the tread 4 at the shoulder portion Sh in the radial direction. The reinforcing layer 16 is stacked outward of the carcass 10, specifically the second ply main body 28a in the radial direction. In the tire 2, elements such as a belt including belt cords extending so as to be tilted relative to the equator plane CL and a band including a band cord spirally wound along substantially the circumferential direction are not provided between the carcass 10 and the reinforcing layer 16.

In the tire 2, the pair of reinforcing layers 16 are disposed with the equator plane CL therebetween in the axial direction. Between one reinforcing layer 16 and the other reinforcing layer 16, the tread 4 is stacked outward of the carcass 10, specifically the second ply main body 28a. In the tire 2, elements such as the above-described belt and band are not provided between the tread 4 and the carcass 10.

In the tire 2, an inner end 34 of each reinforcing layer 16 is located inward of the end TE of the tread surface 18 in the axial direction. An outer end 36 of each reinforcing layer 16 is located outward of the end TE of the tread surface 18 in the axial direction. Although not shown, in the tire 2, the position of the outer end 36 of the reinforcing layer 16 may coincide with the position of the end TE of the tread surface 18 in the axial direction. In the tire 2, in the axial direction, the position of the outer end 36 of the reinforcing layer 16 coincides with the position of the end TE of the tread surface 18, or the outer end 36 of the reinforcing layer 16 is located outward of the end TE of the tread surface 18.

As shown in FIG. 2, the reinforcing layer 16 includes a plurality of reinforcing cords 38 aligned in the circumferential direction. The reinforcing layer 16 is a cord reinforcing layer 40. In FIG. 2, for convenience of description, the reinforcing cords 38 are represented by solid lines, but the reinforcing cords 38 are covered with a topping rubber 42. The cord reinforcing layer 40 includes the plurality of reinforcing cords 38 aligned in the circumferential direction, and the topping rubber 42 covering the reinforcing cords 38. The density of the reinforcing cords 38 included in the cord reinforcing layer 40 is set within a range of not less than 30 ends/5 cm and not greater than 70 ends/5 cm.

In the tire 2, the material of the reinforcing cords 38 is not particularly limited. Cords generally used in the technical field of tires are used as the reinforcing cords 38. The reinforcing cords 38 may be steel cords. The reinforcing cords 38 may be cords formed from an organic fiber. From the viewpoint of easy production of the tire 2, the reinforcing cords 38 are preferably cords formed from an organic fiber. Examples of the organic fiber include nylon fibers, rayon fibers, polyester fibers, and aramid fibers. From the viewpoint of easy production of the tire 2, nylon fibers or polyester fibers are preferable as the organic fiber.

In the tire 2, the reinforcing cords 38 are disposed at intervals in the circumferential direction. One end of each reinforcing cord 38 is located at the inner end 34 of the cord reinforcing layer 40, and the other end of this reinforcing cord 38 is located at the outer end 36 of the cord reinforcing layer 40. This reinforcing cord 38 extends substantially in the axial direction.

During cornering, a force acts on the shoulder portion Sh of the tire 2 such that the tread 4 at the shoulder portion Sh is stretched in the axial direction. A crosslinked rubber having a high modulus is advantageous in terms of wear resistance, but has a low elongation at break. Therefore, when this crosslinked rubber is adopted for the tread 4, there is a concern that damage such as cracks and tears may occur in the tread 4 at the shoulder portion Sh.

In the tire 2, at the shoulder portion Sh, the reinforcing layer 16 located radially inward of the tread 4 is the cord reinforcing layer 40 including the reinforcing cords 38 extending substantially in the axial direction. Therefore, during cornering, even when a force acts on the shoulder portion Sh such that the tread 4 at the shoulder portion Sh is stretched in the axial direction, the reinforcing layer 16 acts to resist this force. In the tire 2, stretching of the tread 4 during cornering is suppressed. Even when a crosslinked rubber having a low elongation at break is adopted for the tread 4, occurrence of damage due to the tread 4 being stretched in the axial direction is suppressed. In the tire 2, a crosslinked rubber having a high modulus can be adopted for the tread 4.

The tire 2 can improve wear resistance while suppressing influence on durability. Since a thin tread 4 can be adopted, it is also possible to reduce the mass of the tire 2. The tire 2 can also contribute to improvement of motion performance. Furthermore, by forming the sidewall 6 from a crosslinked rubber having a hardness at 23°C of not less than 80 and not greater than 95, occurrence of damage such as cracks can be effectively suppressed. In the case where a crosslinked rubber having a hardness at 23°C of not less than 80 and not greater than 95 is used for the sidewall 6, the tire 2 can improve not only motion performance but also durability.

In FIG. 1, the length represented by a double-headed arrow NW is the distance in the axial direction from the equator plane CL to the inner end 34 of the reinforcing layer 16.

In the tire 2, the ratio (NWBW) of the distance NW in the axial direction from the equator plane CL to the inner end 34 of the reinforcing layer 16, to the reference width BW of the tread surface 18, is preferably not less than 0.60 and preferably not greater than 0.80.

When the ratio (NW/BW) is set so as to be not less than 0.60, the influence of the reinforcing layer 16 on the stiffness of the tread 4 is suppressed. In the tire 2, the tread 4 comes into sufficient contact with a road surface. Since grip performance is sufficiently ensured, good steering stability is maintained. From this viewpoint, the ratio (NW/BW) is more preferably not less than 0.62 and further preferably not less than 0.65.

When the ratio (NW/BW) is set so as to be not greater than 0.80, the width of the reinforcing layer 16 is ensured. Since the reinforcing layer 16 effectively contributes to suppression of stretching of the tread 4 during cornering, good durability is maintained in the tire 2. From this viewpoint, the ratio (NW/BW) is more preferably not greater than 0.75 and further preferably not greater than 0.73.

In FIG. 1, the length represented by a double-headed arrow GW is the distance in the axial direction from the end TE of the tread surface 18 to the outer end 36 of the reinforcing layer 16. In the case where the outer end 36 of the reinforcing layer 16 is located outward of the end TE of the tread surface 18 in the axial direction, the distance GW in the axial direction is represented by a positive number.

As described above, in the tire 2, in the axial direction, the position of the outer end 36 of the reinforcing layer 16 coincides with the position of the end TE of the tread surface 18, or the outer end 36 of the reinforcing layer 16 is located outward of the end TE of the tread surface 18. That is, the ratio (GW/BW) of the distance GW in the axial direction from the end TE of the tread surface 18 to the outer end 36 of the reinforcing layer 16, to the reference width BW of the tread surface 18, is not less than 0.00. Accordingly, the reinforcing layer 16 effectively contributes to suppression of stretching of the tread 4 during cornering. In the tire 2, good durability is maintained. From this viewpoint, the ratio (GWBW) is preferably not less than 0.01. From the viewpoint that the reinforcing layer 16 can be disposed directly below an end of a ground-contact surface formed during cornering, the ratio (GWBW) is more preferably not less than 0.02 and further preferably not less than 0.03.

In the tire 2, the ratio (GWBW) of the distance GW in the axial direction from the end TE of the tread surface 18 to the outer end 36 of the reinforcing layer 16, to the reference width BW of the tread surface 18, is preferably not greater than 0.15. Accordingly, the influence of the reinforcing layer 16 on the stiffness of the shoulder portion Sh is suppressed. In the tire 2, good steering stability is maintained. From this viewpoint, the ratio (GWBW) is more preferably not greater than 0.13 and further preferably not greater than 0.10.

In the tire 2, the stress at 200% elongation (hereinafter, also referred to as 200% modulus) of the tread 4 at 100°C is preferably not less than 6.5 MPa. Accordingly, the tread 4 contributes to improvement of wear resistance. Thus, in the tire 2, a thin tread 4 can be adopted. The thin tread 4 contributes to reduction of the weight of the tire 2, and the light tire 2 contributes to improvement of motion performance. From this viewpoint, the 200% modulus of the tread 4 at 100°C is more preferably not less than 7.2 MPa and further preferably not less than 7.5 MPa. From the viewpoint of suppressing the influence of the tread 4 on grip performance, the 200% modulus of the tread 4 at 100°C is preferably not greater than 10 MPa, more preferably not greater than 9.0 MPa, and further preferably not greater than 8.5 MPa.

In the tire 2, the elongation at break of the tread 4 at 100°C is preferably not less than 200%. Accordingly, occurrence of damage to the tread 4 due to the tread 4 being stretched during cornering is suppressed. In the tire 2, good durability is ensured. From this viewpoint, the elongation at break of the tread 4 at 100°C is more preferably not less than 210% and further preferably not less than 220%. From the viewpoint that the tread 4 that can contribute to improvement of wear resistance can be formed, the elongation at break of the tread 4 at 100°C is preferably not greater than 330%, more preferably not greater than 290%, and further preferably not greater than 270%.

A crosslinked rubber that can contribute to improvement of wear resistance and has a high modulus has a low elongation at break. In the tire 2, since the reinforcing layer 16 suppresses stretching of the tread 4 during cornering, a crosslinked rubber having a low elongation at break and a high modulus can be used for the tread 4. From this viewpoint, in the tire 2, the tread 4 may be formed from a crosslinked rubber having an elongation at break at 100°C of not greater than 330% and a 200% modulus at 100°C of not less than 6.5 MPa. The tread 4 may be formed from a crosslinked rubber having an elongation at break at 100°C of not greater than 290% and a 200% modulus at 100°C of not less than 7.2 MPa. The tread 4 may be formed from a crosslinked rubber having an elongation at break at 100°C of not greater than 270% and a 200% modulus at 100°C of not less than 7.5 MPa.

In the tire 2, from the viewpoint of improvement of wear resistance, the crosslinked rubber for forming the tread 4 is preferably a crosslinked rubber having an elongation at break at 100°C of not greater than 330% and a 200% modulus at 100°C of not less than 6.5 MPa, more preferably a crosslinked rubber having an elongation at break at 100°C of not greater than 290% and a 200% modulus at 100°C of not less than 7.2 MPa, and further preferably a crosslinked rubber having an elongation at break at 100°C of not greater than 270% and a 200% modulus at 100°C of not less than 7.5 MPa.

In FIG. 1, the length represented by a double-headed arrow TB is the thickness of the tread 4 at the equator plane CL. The thickness TB of the tread 4 is represented as the distance, from the outer surface of the carcass 10 to the outer surface of the tread 4, measured along the equator plane CL.

In the tire 2, the thickness TB of the tread 4 at the equator plane CL is preferably not greater than 7 mm. The tread 4 is thin. The thin tread 4 contributes to improvement of motion performance. From this viewpoint, the thickness TB of the tread 4 is more preferably not greater than 6 mm and more preferably not greater than 5 mm. From the viewpoint of ensuring the stiffness of the tread 4, the thickness TB of the tread 4 is preferably not less than 2 mm, more preferably not less than 3 mm, and further preferably not less than 4 mm.

In FIG. 1, the position represented by reference character PR is a position on the outer surface of the tread 4. In the tire 2, the distance, from the outer surface of the reinforcing layer 16 to the outer surface of the tread 4, measured along a normal line of the outer surface of the reinforcing layer 16 indicates the maximum when this normal line passes through the position PR on the outer surface of the tread 4. In FIG. 1, the normal line of the outer surface of the reinforcing layer 16 that passes through the position PR is shown by a solid line LR. The distance, from the outer surface of the reinforcing layer 16 to the outer surface of the tread 4, measured along the normal line LR is represented by a double-headed arrow TR. In the tire 2, the distance TR is the thickness of the tread 4 at the shoulder portion Sh. The thickness TR of the tread 4 at the shoulder portion Sh is represented as the maximum thickness.

In the tire 2, from the viewpoint of ensuring service life, the tread 4 is preferably formed such that the thickness TR of the tread 4 at the shoulder portion Sh is larger than the thickness TB of the tread 4 at the equator plane CL. From this viewpoint, the difference (TR-TB) between the thickness TR of the tread 4 at the shoulder portion Sh and the thickness TB of the tread 4 at the equator plane CL is preferably not less than 0.2 mm and more preferably not less than 0.5 mm. From the viewpoint of appropriately maintaining the profile of the tread surface 18 and ensuring good motion performance, the difference (TR-TB) between the thickness TR of the tread 4 at the shoulder portion Sh and the thickness TB of the tread 4 at the equator plane CL is preferably not greater than 2.0 mm and more preferably not greater than 1.0 mm.

As shown in FIG. 1, in the tire 2, the outer end 36 of the reinforcing layer 16 is covered with the sidewall 6. In the case where the sidewall 6 is harder than the rubber of the tread 4, the sidewall 6 effectively holds the reinforcing layer 16. Since the position of the reinforcing layer 16 relative to a ground-contact surface is stably held, the reinforcing layer 16 can effectively contribute to suppression of stretching of the tread 4 during cornering. From this viewpoint, in the case where the sidewall 6 is harder than the rubber of the tread 4, the outer end 36 of the reinforcing layer 16 is preferably covered with the sidewall 6.

In FIG. 1, the length represented by a double-headed arrow RS is an overlapping length by which the sidewall 6 and the reinforcing layer 16 overlap each other. The overlapping length RS is represented as the length, from the end of the sidewall 6 to the outer end 36 of the reinforcing layer 16, measured along the boundary between the sidewall 6 and the reinforcing layer 16.

In the tire 2, from the viewpoint of suppressing the influence of the sidewall 6 on the stiffness of the tread portion T, the overlapping length by which the sidewall 6 and the reinforcing layer 16 overlap each other is preferably not greater than 10 mm and more preferably not greater than 5 mm. In the case where the sidewall 6 is harder than the rubber of the tread 4, the outer end 36 of the reinforcing layer 16 is preferably covered with the sidewall 6, and thus a preferred lower limit of this overlapping length is not set.

In FIG. 2, the angle represented by reference character γ is an angle (hereinafter, tilt angle) of the reinforcing cords 38 included in the cord reinforcing layer 40 relative to the equator plane CL.

As described above, in the tire 2, the cord reinforcing layer 40 including the reinforcing cords 38 extending substantially in the axial direction suppresses occurrence of damage due to the tread 4 being stretched in the axial direction during cornering. The cord reinforcing layer 40 contributes to improvement of durability and also allows a crosslinked rubber having a high modulus to be adopted for the tread 4. From this viewpoint, the tilt angle γ of the reinforcing cords 38 is preferably not less than 70° and more preferably not less than 80°. The tilt angle γ is preferably not greater than 90° and more preferably not greater than 85°.

In FIG. 2, the angle represented by reference character η is an angle (hereinafter, intersection angle) formed between the reinforcing cords 38 included in the cord reinforcing layer 40 and the carcass cords 30 included in the carcass ply 24 (specifically the second ply 28) on which the cord reinforcing layer 40 is stacked.

In the tire 2, the intersection angle η between the reinforcing cords 38 and the carcass cords 30 is preferably not less than 50° and preferably not greater than 70°. When the intersection angle η is set so as to be not less than 50°, stretching of the tread 4 during cornering is effectively suppressed. In the tire 2, good durability is ensured and wear resistance can be improved. From this viewpoint, the intersection angle η is more preferably not less than 55°. When the intersection angle η is set so as to be not greater than 70°, the reinforcing layer 16 effectively holds the carcass 10. In the tire 2, since movement of the shoulder portion Sh is suppressed, wear resistance can be improved in this case as well. From this viewpoint, the intersection angle η is more preferably not greater than 65°.

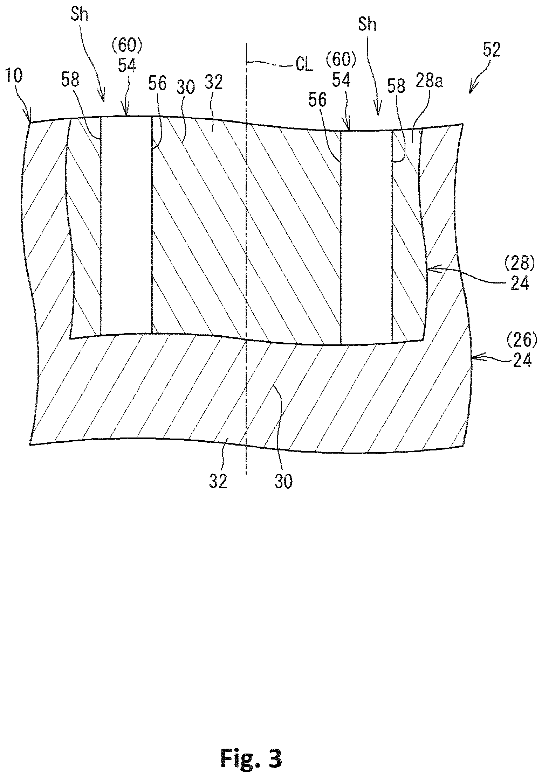

FIG. 3 shows the configuration of reinforcing layers 54 included in a tire 52 for a kart according to another embodiment of the present invention. In FIG. 3, the right-left direction is the axial direction of the tire 52, and the up-down direction is the circumferential direction of the tire 52.

Although not shown, the tire 52 includes a tread, a pair of sidewalls, a pair of beads, a carcass, a pair of chafers, and an inner liner in addition to the reinforcing layers 54. The tire 52 has the same configuration as that of the tire 2 shown in FIG. 1, except for the reinforcing layers 54. In FIG. 3, the carcass is shown together with a pair of the reinforcing layers 54. However, this carcass is designated by the same reference character as the carcass 10 shown in FIG. 1, and the description thereof is omitted.

In the tire 52 as well, each reinforcing layer 54 is included in the shoulder portion Sh. The reinforcing layer 54 is located inward of the tread in the radial direction. The reinforcing layer 54 is stacked outward of the second ply main body 28a, which forms a part of the carcass 10, in the radial direction. Also, in the tire 52, elements such as a belt and a band are not provided between the carcass 10 and the reinforcing layer 54.

In the tire 52, the pair of reinforcing layers 54 are disposed with the equator plane CL therebetween in the axial direction. Between one reinforcing layer 54 and the other reinforcing layer 54, the tread is stacked outward of the carcass 10, specifically the second ply main body 28a. In the tire 52, elements such as the above-described belt and band are not provided between the tread and the carcass 10.

Although not shown, in the tire 52 as well, similar to the tire 2 shown in FIG. 1, an inner end 56 of each reinforcing layer 54 is located inward of an end of a tread surface in the axial direction. In the axial direction, the position of an outer end 58 of each reinforcing layer 54 coincides with the position of the end of the tread surface, or the outer end 58 of each reinforcing layer 54 is located outward of the end of the tread surface.

In the tire 52, the reinforcing layer 54 is formed from a crosslinked rubber. The reinforcing layer 54 is a rubber reinforcing layer 60 harder than the rubber of the tread. The rubber reinforcing layer 60 is located radially inward of the tread at the shoulder portion Sh of the tire 52.

In the tire 52, since the rubber reinforcing layer 60 has high stiffness, even when a force acts on the shoulder portion Sh during cornering such that the tread at the shoulder portion Sh is stretched in the axial direction, the reinforcing layer 54 acts to resist this force. In the tire 52 as well, stretching of the tread during cornering is suppressed. Even when a crosslinked rubber having a low elongation at break is adopted for the tread, occurrence of damage due to the tread being stretched in the axial direction is suppressed. In the tire 52, a crosslinked rubber having a high modulus can be adopted for the tread.

The tire 52 can improve wear resistance while suppressing influence on durability. Since a thin tread can be adopted, the tire 52 can also reduce the mass thereof. The tire 52 can also contribute to improvement of motion performance.

In the tire 52, the hardness of the rubber reinforcing layer 60 at 23°C is preferably not less than 80 and preferably not greater than 95.

When the hardness of the rubber reinforcing layer 60 at 23°C is set so as to be not less than 80, the rubber reinforcing layer 60 effectively suppresses stretching of the tread in the axial direction during cornering. In the tire 52, occurrence of damage due to the tread being stretched in the axial direction is suppressed. The rubber reinforcing layer 60 contributes to improvement of durability and also allows a crosslinked rubber having a high modulus to be adopted for the tread. From this viewpoint, the hardness of the rubber reinforcing layer 60 is more preferably not less than 82 and further preferably not less than 84.

When the hardness of the rubber reinforcing layer 60 at 23°C is set so as to be not greater than 95, occurrence of damage at the interface between the rubber reinforcing layer 60 and the tread is suppressed. In the tire 52, good durability is maintained. From this viewpoint, the hardness of the rubber reinforcing layer 60 is more preferably not greater than 93 and further preferably not greater than 90.

In the tire 52, the difference between the hardness of the rubber reinforcing layer 60 and the hardness of the rubber of the tread at 23°C is preferably not less than 10 and preferably not greater than 30.

When the difference between the hardness of the rubber reinforcing layer 60 and the hardness of the rubber of the tread at 23°C is set so as to be not less than 10, the rubber reinforcing layer 60 effectively suppresses stretching of the tread in the axial direction during cornering. In the tire 52, occurrence of damage due to the tread being stretched in the axial direction is suppressed. The rubber reinforcing layer 60 contributes to improvement of durability and also allows a crosslinked rubber having a high modulus to be adopted for the tread. From this viewpoint, the difference between the hardness of the rubber reinforcing layer 60 and the hardness of the rubber of the tread is more preferably not less than 12 and further preferably not less than 15.

When the difference between the hardness of the rubber reinforcing layer 60 and the hardness of the rubber of the tread at 23°C is set so as to be not greater than 30, occurrence of damage at the interface between the rubber reinforcing layer 60 and the tread is suppressed. In the tire 52, good durability is maintained. From this viewpoint, the difference between the hardness of the rubber reinforcing layer 60 and the hardness of the rubber of the tread is more preferably not greater than 28 and further preferably not greater than 25.

The reinforcing layer 54 of the tire 52 is the rubber reinforcing layer 60 harder than the rubber of the tread. The reinforcing layer 16 of the tire 2 shown in FIG. 1 is the cord reinforcing layer 40 including the plurality of reinforcing cords 38 aligned in the circumferential direction. From the viewpoint of easy production of the tire, the rubber reinforcing layer 60 is preferable as the reinforcing layer.

In the tire 52, the hardness of each sidewall is preferably not less than 80 and preferably not greater than 95. Accordingly, further improvement of motion performance is achieved. In this case, the sidewall is harder than the rubber of the tread, and the difference between the hardness of the sidewall and the hardness of the rubber of the tread at 23°C is preferably not less than 10 and preferably not greater than 30. Furthermore, in this case, the rubber reinforcing layer 60 may be formed from a material that is different from the material of the sidewall, or may be formed from a material that is the same as the material of the sidewall.

As described above, according to the present invention, a tire for a kart that can improve wear resistance while suppressing influence on durability is obtained. In particular, the tire 2 and the tire 52 can improve wear resistance while suppressing influence on durability, and further can improve motion performance. In the tire 2 and the tire 52, a reduction in appearance quality and motion performance due to use is suppressed. The tire 2 and the tire 52 have more excellent motion performance as compared to conventional tires, and have longer service life than conventional tires. The tire 2 and the tire 52 reduce the frequency of tire replacement for a kart. In particular, tires for a rental kart are required to have a long service life. The tire 2 and the tire 52 are suitably used as tires for a rental kart.

### EXAMPLES

Hereinafter, the present invention will be described in further detail by means of examples, etc., but the present invention is not limited to these examples but only by the appended claims.

### [Example 1]

A tire for a kart (tire size = 10×4.50-5) having the basic structure shown in FIG. 1 and having specifications shown in Table 1 below was obtained. This tire is for the front.

In Example 1, the elongation at break (Elo.) of the tread at 100°C was 270%, and the 200% modulus (M200) of the tread at 100°C was 7.5 MPa.

In Example 1, the ratio (NWBW) of the distance NW in the axial direction from the equator plane to the inner end of the reinforcing layer, to the distance BW in the axial direction from the equator plane to the end of the tread surface, was 0.70. The ratio (GW/BW) of the distance GW in the axial direction from the end of the tread surface to the outer end of the reinforcing layer, to the distance BW in the axial direction, was 0.06.

In Example 1, a cord reinforcing layer having the configuration shown in FIG. 2 was used as each reinforcing layer. This is indicated in the cell for configuration in Table 1. Cords formed from a nylon fiber were used as the reinforcing cords. The tilt angle γ of the reinforcing cords was 85° (degrees). Each of the tilt angle α of the carcass cords included in the first ply and the tilt angle β of the carcass cords included in the second ply was 30°.

In Example 1, the thickness TB of the tread at the equator plane was 6.0 mm, and the thickness TR of the tread at the shoulder portion was 7.0 mm. The hardness of the rubber of the tread at 23°C was 70, and the hardness of the sidewall at 23°C was 90. The outer end of the reinforcing layer was covered with the sidewall, and the overlapping length RS was 5 mm.

### [Comparative Examples 1 to 3]

Tires of Comparative Examples 1 to 3 were obtained in the same manner as Example 1, except that the reinforcing layers were not provided and the elongation at break and the 200% modulus of the tread at 100°C were as shown in Table 1 below.

### [Example 2]

A tire of Example 2 was obtained in the same manner as Example 1, except that the elongation at break and the 200% modulus of the tread at 100°C were as shown in Table 1 below.

### [Examples 3 and 4]

Tires of Examples 3 and 4 were obtained in the same manner as Example 1, except that the ratio (GWBW) and the elongation at break and the 200% modulus of the tread at 100°C were as shown in Table 2 below.

### [Example 5]

A tire of Example 5 was obtained in the same manner as Example 1, except that the tilt angle γ of the reinforcing cords was as shown in Table 2 below.

### [Example 6]

A tire of Example 6 was obtained in the same manner as Example 1, except that a rubber reinforcing layer having the configuration shown in FIG. 3 was used as each reinforcing layer. In Example 6, the hardness of the rubber reinforcing layer at 23°C was 90.

### [Mounting of Test Tires]

Test tires were fitted onto rims (size = 4.5×5.0) and inflated with air to adjust the internal pressure thereof to 120 kPa. The test tires were mounted to the front wheels of a test vehicle (a kart vehicle equipped with a four-stroke engine having an engine displacement of 190 cc). Commercially available tires (size = 11×6.50-5) were fitted onto rims (size = 6.5×5.0) and inflated with air to adjust the internal pressure thereof to 120 kPa. The tires were mounted to the rear wheels of the test vehicle.

### [Lap Time]

A running test was carried out by a driver causing the above-described test vehicle to run 10 laps on a 960 m circuit course. In the running test, the lap time on the third lap and the lap time on the sixth lap were measured, and the fastest lap was obtained. The difference between the fastest lap of each Example and the fastest lap of Comparative Example 1 was calculated. The results are shown in Tables 1 and 2 below. The higher the value is, the shorter the lap time is.

### [Steering Stability]

In the above-described running test regarding lap time, the driver made evaluations (sensory evaluations) for steering stability. The results are shown as indexes in Tables 1 and 2 below. The higher the value is, the better the steering stability of the tire is.

### [Wear Resistance]

The above-described test vehicle was caused to run 800 laps by the driver on the 960 m circuit course. After running, the amount of wear was measured on the basis of a wear indicator provided to each tire. The results are shown as indexes in Tables 1 and 2 below. The higher the value is, the better the wear resistance of the tire is.

### [Crack]

The appearance of each tire after the above-described running test regarding wear resistance was observed to confirm the presence/absence of cracks, and if any crack was found, the length of the crack was measured. The results are shown in Tables 1 and 2 below on the basis of the following categorization.
A: No cracks occurred.
B: The length of a crack was less than 5 mm.
C: The length of a crack was equal to or greater than 5 mm and less than 10 mm.
D: The length of a crack was equal to or greater than 10 mm.

**[Table 1]**

| | Comparative Example 1 | Comparative Example 2 | Comparative Example 3 | Example 1 | Example 2 |
|---|---|---|---|---|---|
| Configuration | - | - | - | FIG. 2 | FIG. 2 |
| Elo. [%] | 270 | 290 | 330 | 270 | 290 |
| 200M [MPa] | 7.5 | 7.2 | 6.5 | 7.5 | 7.2 |
| NW/BW [-] | - | - | - | 0.70 | 0.70 |
| GW/BW [-] | - | - | - | 0.06 | 0.06 |
| Angle γ [°] | - | - | - | 85 | 85 |
| Hr | - | - | - | - | - |
| Lap time [sec] | BM | 0.2 | 0.5 | 0.5 | 0.7 |
| Steering stability | 100 | 102 | 105 | 105 | 107 |
| Wear resistance | 100 | 96 | 90 | 105 | 101 |
| Crack | D | C | B | A | A |

**[Table 2]**

| | Example 3 | Example 4 | Example 5 | Example 6 |
|---|---|---|---|---|
| Configuration | FIG. 2 | FIG. 2 | FIG. 2 | FIG. 3 |
| Elo. [%] | 270 | 270 | 270 | 270 |
| 200M [MPa] | 7.5 | 7.5 | 7.5 | 7.5 |
| NW/BW [-] | 0.70 | 0.70 | 0.70 | 0.70 |
| GW/BW [-] | 0.00 | 0.15 | 0.06 | 0.06 |
| Angle γ [°] | 85 | 85 | 60 | - |
| Hr | - | - | - | 90 |
| Lap time [sec] | 0.2 | 0.0 | 0.2 | 0.5 |
| Steering stability | 102 | 100 | 102 | 105 |
| Wear resistance | 105 | 105 | 102 | 105 |
| Crack | B | A | B | A |

As shown in Tables 1 and 2, it is confirmed that, in each Example, wear resistance is improved while suppressing influence on durability, and each Example has a lap time and steering stability equal to or better than those of each Comparative Example. From the evaluation results, advantages of the present invention are clear.

The above-described technology to improve wear resistance while suppressing influence on durability can also be applied to various tires.

## Claims

1. A tire (2, 52) for a kart, comprising:
a tread (4) having a tread surface (18) that comes into contact with a road surface;
a pair of sidewalls (6) connected to ends of the tread (4) and located radially inward of the tread (4);
a pair of beads (8) located radially inward of the sidewalls (6);
a carcass (10) extending on and between one bead (8) and the other bead (8); and
a pair of reinforcing layers (16, 54) disposed with an equator plane (CL) therebetween in an axial direction, wherein
in a radial direction, the reinforcing layers (16, 54) are located inward of the tread (4) and stacked outward of the carcass (10), wherein the carcass (10) has a bias structure,
in the axial direction, an inner end (34, 56) of each reinforcing layer (16, 54) is located inward of an end (TE) of the tread surface (18),
in the axial direction, a position of an outer end (36, 58) of each reinforcing layer (16, 54) coincides with a position of the end (TE) of the tread surface (18), or the outer end (36, 58) of each reinforcing layer (16, 54) is located outward of the end (TE) of the tread surface (18), and
each reinforcing layer (16, 54) is a rubber reinforcing layer (60) harder than a rubber of the tread (4), or a cord reinforcing layer (40) including a plurality of reinforcing cords (38) aligned in a circumferential direction.

2. The tire (2, 52) for a kart according to claim 1, wherein a ratio (NW/BW) of a distance (NW) in the axial direction from the equator plane (CL) to the inner end (34, 56) of the reinforcing layer (16, 54), to a distance (BW) in the axial direction from the equator plane (CL) to the end (TE) of the tread surface (18), is not less than 0.60 and not greater than 0.80.

3. The tire (2, 52) for a kart according to claim 1 or 2, wherein a ratio (GWBW) of a distance (GW) in the axial direction from the end (TE) of the tread surface (18) to the outer end (36, 58) of the reinforcing layer (16, 54), to the distance (BW) in the axial direction from the equator plane (CL) to the end (TE) of the tread surface (18), is not greater than 0.15.

4. The tire (2, 52) for a kart according to any one of claims 1 to 3, wherein the tread (4) has a stress at 200% elongation at 100°C of not less than 6.5 MPa.

5. The tire (2) for a kart according to any one of claims 1 to 4, wherein
the reinforcing layer (16) is the cord reinforcing layer (40) including the plurality of reinforcing cords (38) aligned in the circumferential direction, and
an angle of the reinforcing cords (38) relative to the equator plane (CL) is not less than 70° and not greater than 90°.

6. The tire (2) for a kart according to claim 5, wherein
the carcass (10) includes at least two carcass plies (24),
each of the two carcass plies (24) includes a plurality of aligned carcass cords (30), and
an angle formed between the reinforcing cords (38) and the carcass cords (30) included in the carcass ply (24) on which the cord reinforcing layer (40) is stacked is not less than 50° and not greater than 70°.

7. The tire (52) for a kart according to any one of claims 1 to 4, wherein
the reinforcing layer (54) is the rubber reinforcing layer (60) harder than the rubber of the tread, and
the rubber reinforcing layer (60) has a hardness of not less than 80 and not greater than 95, wherein the hardness is measured according to the standards of JIS K6253 under a temperature condition of 23°C using a type A durometer.

8. The tire (52) for a kart according to claim 7, wherein a difference between the hardness of the reinforcing layer (60) and a hardness of the rubber of the tread is not less than 10 and not greater than 30, wherein the hardness is measured according to the standards of JIS K6253 under a temperature condition of 23°C using a type A durometer.

## Patentansprüche

1. Reifen (2, 52) für einen Wagen, umfassend:
eine Lauffläche (4) mit einer Laufflächenoberfläche (18), die mit einer Straßenoberfläche in Kontakt kommt;
ein Paar Seitenwände (6), die mit Enden der Lauffläche (4) verbunden und radial innen von der Lauffläche (4) angeordnet sind;
ein Paar Wülste (8), die radial innen von den Seitenwänden (6) angeordnet sind;
eine Karkasse (10), die sich auf und zwischen einem Wulst (8) und dem anderen Wulst (8) erstreckt; und
ein Paar Verstärkungsschichten (16, 54), die mit einer Äquatorebene (CL) dazwischen in einer axialen Richtung angeordnet sind, wobei
in einer radialen Richtung die Verstärkungsschichten (16, 54) innen von der Lauffläche (4) angeordnet und außen von der Karkasse (10) gestapelt sind, wobei die Karkasse (10) eine Diagonalstruktur aufweist,
in der axialen Richtung ein inneres Ende (34, 56) jeder Verstärkungsschicht (16, 54) innen von einem Ende (TE) der Laufflächenoberfläche (18) angeordnet ist,
in der axialen Richtung eine Position eines äußeren Endes (36, 58) jeder Verstärkungsschicht (16, 54) mit einer Position des Endes (TE) der Laufflächenoberfläche (18) übereinstimmt oder das äußere Ende (36, 58) jeder Verstärkungsschicht (16, 54) außen von dem Ende (TE) der Laufflächenoberfläche (18) angeordnet ist, und
jede Verstärkungsschicht (16, 54) eine Gummiverstärkungsschicht (60), die härter als ein Gummi der Lauffläche (4) ist, oder eine Kordverstärkungsschicht (40) ist, die eine Vielzahl von Verstärkungskorden (38) umfasst, die in einer Umfangsrichtung ausgerichtet sind.

2. Reifen (2, 52) für einen Wagen nach Anspruch 1, wobei ein Verhältnis (NW/BW) eines Abstands (NW) in der axialen Richtung von der Äquatorebene (CL) zu dem inneren Ende (34, 56) der Verstärkungsschicht (16, 54) zu einem Abstand (BW) in der axialen Richtung von der Äquatorebene (CL) zu dem Ende (TE) der Laufflächenoberfläche (18) nicht kleiner als 0,60 und nicht größer als 0,80 ist.

3. Reifen (2, 52) für einen Wagen nach Anspruch 1 oder 2, wobei ein Verhältnis (GW/BW) eines Abstands (GW) in der axialen Richtung von dem Ende (TE) der Laufflächenoberfläche (18) zu dem äußeren Ende (36, 58) der Verstärkungsschicht (16, 54) zu dem Abstand (BW) in der axialen Richtung von der Äquatorebene (CL) zu dem Ende (TE) der Laufflächenoberfläche (18) nicht größer als 0,15 ist.

4. Reifen (2, 52) für einen Wagen nach einem der Ansprüche 1 bis 3, wobei die Lauffläche (4) eine Spannung bei 200 % Dehnung bei 100 °C von nicht weniger als 6,5 MPa aufweist.

5. Reifen (2) für einen Wagen nach einem der Ansprüche 1 bis 4, wobei
die Verstärkungsschicht (16) die Kordverstärkungsschicht (40) ist, die die Vielzahl von Verstärkungskorden (38) umfasst, die in der Umfangsrichtung ausgerichtet sind, und
ein Winkel der Verstärkungskorde (38) relativ zu der Äquatorebene (CL) nicht weniger als 70° und nicht mehr als 90° beträgt.

6. Reifen (2) für einen Wagen nach Anspruch 5, wobei
die Karkasse (10) mindestens zwei Karkasslagen (24) umfasst,
jede der zwei Karkasslagen (24) eine Vielzahl von ausgerichteten Karkasskorden (30) umfasst, und
ein Winkel, der zwischen den Verstärkungskorden (38) und den Karkasskorden (30) gebildet ist, die in der Karkasslage (24) enthalten sind, auf der die Kordverstärkungsschicht (40) gestapelt ist, nicht weniger als 50° und nicht mehr als 70° beträgt.

7. Reifen (52) für einen Wagen nach einem der Ansprüche 1 bis 4, wobei
die Verstärkungsschicht (54) die Gummiverstärkungsschicht (60) ist, die härter als der Gummi der Lauffläche ist, und
die Gummiverstärkungsschicht (60) eine Härte von nicht weniger als 80 und nicht mehr als 95 aufweist, wobei die Härte gemäß den Normen von JIS K6253 unter einer Temperaturbedingung von 23° unter Verwendung eines Durometers Typ A gemessen ist.

8. Reifen (52) für einen Wagen nach Anspruch 7, wobei eine Differenz zwischen der Härte der Verstärkungsschicht (60) und einer Härte des Gummis der Lauffläche nicht weniger als 10 und nicht mehr als 30 beträgt, wobei die Härte gemäß den Normen von JIS K6253 unter einer Temperaturbedingung von 23° unter Verwendung eines Durometers Typ A gemessen ist.

## Revendications

1. Pneumatique (2, 52) pour un kart, comprenant :
une bande de roulement (4) ayant une surface de bande de roulement (18) qui vient en contact avec une surface routière ;
une paire de parois latérales (6) connectées à des extrémités de la bande de roulement (4) et situées radialement à l'intérieur de la bande de roulement (4) ;
une paire de talons (8) situés radialement à l'intérieur des parois latérales (6) ;
une carcasse (10) s'étendant sur et entre un talon (8) et l'autre talon (8) ; et
une paire de couches de renforcement (16, 54) disposées avec un plan d'équateur (CL) entre celles-ci dans une direction axiale, dans lequel
dans une direction radiale, les couches de renforcement (16, 54) sont situées à l'intérieur de la bande de roulement (4) et empilées à l'extérieur de la carcasse (10), dans laquelle la carcasse (10) a une structure diagonale,
dans la direction axiale, une extrémité intérieure (34, 56) de chaque couche de renforcement (16, 54) est située à l'intérieur d'une extrémité (TE) de la surface de bande de roulement (18),
dans la direction axiale, une position d'une extrémité extérieure (36, 58) de chaque couche de renforcement (16, 54) coïncide avec une position de l'extrémité (TE) de la surface de bande de roulement (18), ou l'extrémité extérieure (36, 58) de chaque couche de renforcement (16, 54) est située à l'extérieur de l'extrémité (TE) de la surface de bande de roulement (18), et
chaque couche de renforcement (16, 54) est une couche de renforcement en caoutchouc (60) plus dure qu'un caoutchouc de la bande de roulement (4), ou une couche de renforcement à câblés (40) incluant une pluralité de câblés de renforcement (38) alignés dans une direction circonférentielle.

2. Pneumatique (2, 52) pour un kart selon la revendication 1, dans lequel un rapport (NW/BW) d'une distance (NW) dans la direction axiale depuis le plan d'équateur (CL) jusqu'à l'extrémité intérieure (34, 56) de la couche de renforcement (16, 54), sur une distance (BW) dans la direction axiale depuis le plan d'équateur (CL) jusqu'à l'extrémité (TE) de la surface de bande de roulement (18), n'est pas inférieur à 0,60 et n'est pas supérieur à 0,80.

3. Pneumatique (2, 52) pour un kart selon la revendication 1 ou 2, dans lequel un rapport (GW/BW) d'une distance (GW) dans la direction axiale depuis l'extrémité (TE) de la surface de bande de roulement (18) jusqu'à l'extrémité extérieure (36, 58) de la couche de renforcement (16, 54), sur une distance (BW) dans la direction axiale depuis le plan d'équateur (CL) jusqu'à l'extrémité (TE) de la surface de bande de roulement (18), n'est pas supérieur à 0,15.

4. Pneumatique (2, 52) pour un kart selon l'une quelconque des revendications 1 à 3, dans lequel la bande de roulement (4) a une contrainte à 200 % d'allongement à 100 °C qui n'est pas inférieure à 6,5 MPa.

5. Pneumatique (2) pour un kart selon l'une quelconque des revendications 1 à 4, dans lequel
la couche de renforcement (16) est la couche de renforcement à câblés (40) incluant la pluralité de câblés de renforcement (38) alignés dans la direction circonférentielle, et
un angle des câblés de renforcement (38) relativement au plan d'équateur (CL) n'est pas inférieur à 70° et n'est pas supérieur à 90°.

6. Pneumatique (2) pour un kart selon la revendication 5, dans lequel
la carcasse (10) inclut au moins deux nappes de carcasse (24),
chacune des deux nappes de carcasse (24) inclut une pluralité de câblés de carcasse alignés (30), et
un angle formé entre les câblés de renforcement (38) et les câblés de carcasse (30) inclus dans la nappe de carcasse (24) sur laquelle la couche de renforcement à câblés (40) est empilée n'est pas inférieur à 50° et n'est pas supérieur à 70°.

7. Pneumatique (52) pour un kart selon l'une quelconque des revendications 1 à 4, dans lequel
la couche de renforcement (54) est la couche de renforcement en caoutchouc (60) plus dure que le caoutchouc de la bande de roulement, et
la couche de renforcement en caoutchouc (60) a une dureté qui n'est pas inférieure à 80 et qui n'est pas supérieure à 95, la dureté étant mesurée conformément aux standards de la norme industrielle japonaise JIS K6253 dans une condition de température de 23 °C à l'aide d'un duromètre de type A.

8. Pneumatique (52) pour un kart selon la revendication 7, dans lequel une différence entre la dureté de la couche de renforcement (60) et une dureté du caoutchouc de la bande de roulement n'est pas inférieure à 10 et n'est pas supérieure à 30, la dureté étant mesurée conformément aux standards de la norme industrielle japonaise JIS K6253 dans une condition de température de 23 °C à l'aide d'un duromètre de type A.
